# EUROPÄISCHE PATENTSCHRIFT

(11) **EP 1 255 663 B1**
(45) Veröffentlichungstag und Bekanntmachung des Hinweises auf die Patenterteilung: **02.06.2004**
(21) Anmeldenummer: 01900086.8
(22) Anmeldetag: 18.01.2001
(51) Int. Cl.: B60R 13/02, B60R 13/08, B32B 3/12

(54) **AKUSTISCH WIRKSAME HUTABLAGE**
ACOUSTICALLY EFFECTIVE REAR PARCEL SHELF
PLAGE ARRIERE A EFFET ACOUSTIQUE

(30) Priorität: 10.02.2000 CH 270002000
(43) Veröffentlichungstag der Anmeldung: 13.11.2002
(73) Patentinhaber: RIETER AUTOMOTIVE (INTERNATIONAL) AG, 8702 Zollikon (CH)
(72) Erfinder: ALTS, Thorsten, 64401 Gross-Bieberau (DE); CASULLI, Jean, F-78200 Mantes la Ville (FR); BUISSON, Claude, F-78700 Conflans Sainte Honorine (FR)
(74) Vertreter: Felber, Josef
(86) Internationale Anmeldenummer: PCT/CH2001/000039
(87) Internationale Veröffentlichungsnummer: WO 2001/058722

(56) Entgegenhaltungen:
- EP-A- 0 658 644
- EP-A- 0 787 578
- WO-A-98/18656
- WO-A-98/18657
- WO-A-99/35007
- WO-A-99/44817
- US-A- 4 479 992

## Beschreibung

Die vorliegende Erfindung betrifft ein Bauteil gemäss Oberbegriff des Anspruchs 1.

Hutablagen sind wichtige Komponenten bei der Innengestaltung von Fahrzeugen. Sie dienen nicht nur als Ablagefläche, sondern trennen den Gepäckraum von der Fahrgastzelle. Sie müssen deshalb ästhetisch befriedigen, genügend steif sein, um Lasten bis zu 30 kg tragen zu können und müssen insbesondere akustisch wirksam sein, um die Übertragung des im Kofferraum, beispielsweise von den Radkästen, erzeugten Schallfeldes zur Fahrgastzelle abzuschwächen. Darüber hinaus sollen diese Hutablagen leichtgewichtig sein, kostengünstig herstellbar sein und die kundenspezifischen Erfordernisse an Fahrzeug-Innenauskleidungen erfüllen können.

Es sind verschiedene Innenauskleidungen bekannt, welche einen versteifenden, wabenzellenartigen Stützkörper aufweisen, der beidseitig mit verstärkenden Faserschichten und mit mindestens einer Dekorschicht versehen ist. Ein derartiges Bauelement ist beispielsweise aus der EP 0 787 578 bekannt. Diese Druckschrift beschreibt ein mehrlagiges Bauelement, dessen Stützkörper eine Wabenanordnung aufweist und dessen Deckschichten kraft- bzw. formschlüssig an den Stirnkanten der einzelnen Wabenzellen verbunden sind. Diese Deckschichten sind aus thermoplastischem Kunststoff gefertigt und sind nicht luftdurchlässig. Dieses Bauelement wirkt schalldämmend und eignet sich nicht für die Verwendung als akustisch wirksame Hutablage.

In der gattungsbildenden WO 99/35007 wird ein ultraleichter, schall- und schockabsorbierender Bausatz beschrieben. Dieser Bausatz weist eine Zwischenschicht 3 auf, welche aus einer Vielzahl röhrchenförmiger Elemente 2 gebildet wird. Diese röhrchenförmigen Elemente erfüllen zwei Funktionen, einerseits bestimmen diese die Schockabsorptionsfähigkeit des gesamten Bausatzes und andererseits dienen diese röhrchenförmigen Elemente der akustischen Absorptionsfähigkeit. Dies ist jedoch nur deshalb möglich, weil eine Abdeckschicht 6 als schalldurchlässige Abdeckschicht ausgebildet ist, und es damit dem zu absorbierenden Schallfeld erlaubt wird, mit dem durch die röhrchenförmigen Elemente gebildete Hohlraumlabyrinth zusammen zu wirken. Dieser schall- und schockabsorbierender Bausatz eignet sich wegen der lose aufeinander aufliegenden Schicht nicht als Hutablage.

Aus der EP 0 658 644 ist ein Leichbauteil bekannt, welches aus Geweben mit einem grossen Elastizitätsmodul aufgebaut ist. Dieses Leichtbauteil eignet sich insbesondere für die Herstellung Überkopf-Gepäckablagefächern, wie sie in der Luftfahrtindustrie verwendet werden. Eine besondere akustische Absorptionsfähigkeit weisen diese Bauteile nicht auf und eignen sich deshalb nicht für die Verwendung als akustisch wirksame Hutablagen in Motorfahrzeugen.

Es ist Aufgabe der vorliegenden Erfindung, eine Hutablage mit hoher Schallabsorption zu schaffen, welche leichtgewichtig, genügend steif und in einfacher Weise herstellbar ist. Es ist darüber hinaus Aufgabe der vorliegenden Erfindung, ein Bauteil zu schaffen, welches eine ausgeprägte Dämpfungscharakteristik aufweist, um von Hohlräumen, insbesondere von Kofferräumen, Reserveradkästen und anderen Stauräumen erzeugte Resonanzen kontrollierbar zu dämpfen.

Diese Aufgaben werden durch ein Bauteil mit den Merkmalen des Anspruchs 1 gelöst. Die Versteifungsschichten gemäß Anspruch 1 bestehen aus einem luftdurchlässigen und thermoplastischen Fasermaterial, welches beispielsweise mindestens 50% Polypropylenfasern umfasst. Unter Polypropylenfasern werden im folgenden Fasern verstanden, die vollständig aus Polypropylen gefertigt sind oder Koextrusionsfasern, welche einen Mantel aus Polypropylen und einen Kern aus beispielsweise bei höheren Temperaturen schmelzendem Polyester aufweisen. In einer bevorzugten Ausführungsform der erfindungsgemässen Hutablage sind die Polypropylenfasern mit der Kernschicht stoffschlüssig verbunden respektive verschmolzen. Wesentlich für das akustische Verhalten der erfindungsgemässen Hutablage ist die Luftdurchlässigkeit der Versteifungsschichten, wobei der Luftströmungswiderstand dieser Versteifungsschichten für einen gewünschten Bereich eingestellt werden kann. Die Auswahl und Mischung der verwendeten Fasern/Bindemittel liegt im Bereich des fachmännischen Könnens und Handelns. Es versteht sich also, dass diese versteifungsschichten auch mit Zusätzen aus pulverförmigem Bindemittel und/oder halb-thermoplastischem Lackpulver hergestellt werden können. In einer bevorzugten Ausführungsform weisen die Versteifungsschichten einen Anteil von ca. 30% an Versteifungsfasern auf. Als Versteifungsfasern kommen Mineralfasern, vorzugsweise Glasfasern, Synthetikfasern, vorzugsweise PES-, PA-, Polyacryl-Aramidfasern und andere, dem Fachmann als Versteifungsfasern bekannte Fasern, in Betracht. Diese Versteifungsschichten weisen bevorzugterweise ein Flächengewicht von 300 bis 1000 g/m2 auf und eignen sich für die erfindungsgemässe Hutablage in besonderer Weise. In einer weiteren Ausführungsform umfasst die Versteifungsschicht eine erste, ca. 20% Polypropylenfasern aufweisende Faservliesschicht und eine zweite, ca. 20 - 50 gr/m2 leichte, aus SMMS-Fasern (Spun-bond, Melt-blown, Melt-blown, Spun-bond Polypropylenfasern) gebildete Verbindungsschicht. Es versteht sich, dass die Dicke der Kernschicht den Bedürfnissen entsprechend variiert werden kann.

Diese Aufgabe wird im weiteren durch ein Verfahren mit den Merkmalen des Anspruchs 11 gelöst. Dabei wird ein Stapel, welcher mindestens eine wabenförmige Kernschicht und beidseitig davon angeordnete, vorverdichtete Versteifungsschichten aufweist, zwischen zwei beheizbare Platten gebracht. Mit Hilfe dieser Platten wird der Stapel derart aufgewärmt, dass die thermoplastischen Bindefasern der Versteifungsschichten und der Verbindungsbereich der Kernschicht erweichen und zu schmelzen beginnen, d.h. die Kernschicht ihre Form, und die Versteifungsschichten ihre Luftdurchlässigkeit nicht verlieren. Nach dieser Aufwärmphase wird der Stapel in ein kaltes Formwerkzeug transferiert, um dort die einzelnen Schichten miteinander zu verbinden und in ihre endgültige Form zu bringen.

Im folgenden soll die Erfindung anhand eines Ausführungsbeispiels und mit Hilfe der Figuren näher beschrieben werden. Es zeigen:
Figur 1 eine Querschnitt-Darstellung einer erfindungsgemässen Hutablage;

Figur 2 eine schematische Darstellung eines Prozesses für die Herstellung der erfindungsgemässen Hutablage.

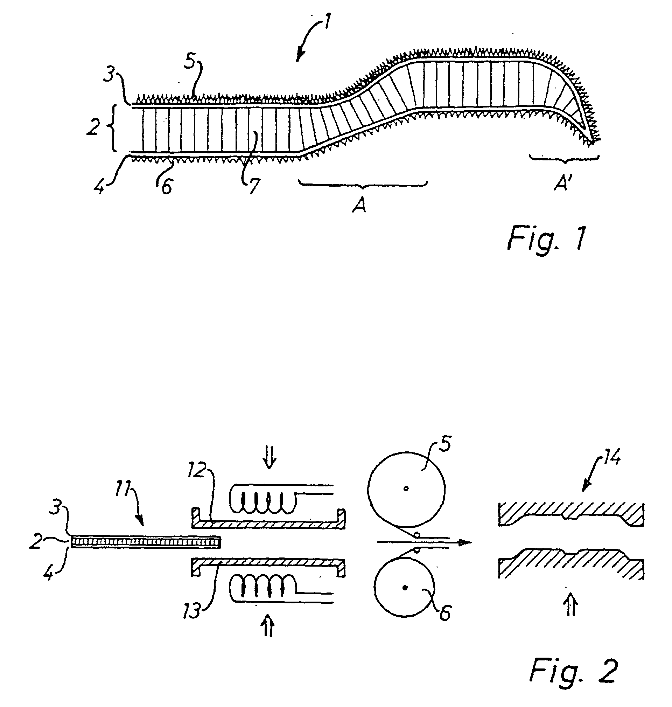

Der in der Figur 1 gezeigte Aufbau der erfindungsgemässen Hutablage 1 umfasst eine Kernschicht 2, welche eine wabenartige Struktur aufweist. Die einzelnen Waben können eine polygonale oder zylindrische Form mit beliebigem Querschnitt aufweisen. In einer bevorzugten Ausführungsform sind diese 5 bis 30 mm hoch, haben einen Durchmesser von ca. 10 mm und eine Wandstärke von 50 bis 500 µm. In einer bevorzugten Ausführungsform ist diese Kernschicht 2 aus Polypropylen gefertigt. Diese Kernschicht (2) ist beidseitig mit einer vorverdichteten Faser- respektive Versteifungsschicht 3, 4 verbunden. Diese Versteifungsschicht umfasst im wesentlichen über 50% Propylenfasern, vorzugsweise 70%, und Versteifungsfasern, vorzugsweise Glasfasern, Polyesterfasern oder Aramidfasern oder geeignete Gemische davon. Mit den Polypropylenfasern kann eine einfache Verbindung, Verschmelzung mit der Kernschicht aus Polypropylen erzielt werden. Es ist Aufgabe dieser Versteifungsschichten 3 und 4 der fertigen Hutablage die notwendige Biegesteifigkeit zu verleihen. Diese Biegesteifigkeit respektive Dehnsteifigkeit kann Werte zwischen 10'000 und 1'000'000 Nm erreichen, wenn die Versteifungsschicht vor dessen Verbindung mit der Kernschicht 2 vorverdichtet worden ist. Durch die Verwendung von vorverdichteten Versteifungsschichten wird vermieden, dass sich beim Herstellen der Hutablage diese Versteifungsschichten kissenförmig in die einzelnen Zellen der Kernschicht hineinwölben. Erfindungsgemäss wird darauf geachtet, dass die Versteifungsfasern in der Versteifungsschicht möglichst in einer Ebene liegen, um somit ein erhöhtes Dehnmodul zu erzeugen, respektive damit zu vermeiden, dass sich gewölbte Versteifungsschichten bilden, die ein unerwünscht niedriges Dehnmodul aufweisen würden. In einer bevorzugten Ausführungsform werden sowohl fahrgastraumseitig als auch kofferraumseitig Versteifungsschichten mit einem Flächengewicht von ca. 300 bis 1000 g/m2 verwendet. Die erfindungsgemässe Hutablage erlaubt aber auch die Verwendung von zusätzlichen Schichten, beispielsweise zur Verbesserung der stoffschlüssigen Verbindung zwischen Kernschicht und Versteifungsschicht. Für derartige Zusatzschichten können sogenannte Polypropylen SMMS-Materialen verwendet werden. In einer bevorzugten Ausführungsform weist diese Zusatzschicht ein Flächengewicht von 20 bis 50 g/m2 auf.

Um eine möglichst gute akustische Wirksamkeit erzeugen zu können, sind diese Versteifungsschichten 3, 4 luftdurchlässig ausgebildet und weisen einen Luftströmungswiderstand von 500 bis 3500 Nsm⁻³, vorzugsweise von 1500 bis 3000 Nsm⁻³ auf. Damit kann das Schallfeld in die einzelnen Zellen 7 der Kernschicht 2 eindringen und absorbiert werden oder nur teilweise durchdringen und eine akustische Anbindung des dahinter liegenden Raumes erbringen. Es versteht sich, dass die verwendeten Versteifungsschichten in Abhängigkeit zu den gewünschten mechanischen und akustischen Eigenschaften vorverdichtet sein können. Diese Hutablage kann mit zusätzlichen Dekorschichten versehen sein, welche Dekorschichten ebenfalls luftdurchlässig sind und in Form von Vlies, Filz, Gewebe, Gewirke oder anderen textilartigen Materialien aufgebracht sein können. Eine derart aufgebaute Hutablage weist beispielsweise ein Flächengewicht von 2700 g/m2 auf, erfüllt die Auflagen der Automobilindustrie bezüglich Steifigkeit und Formstabilität, ist unempfindlich gegen Luftfeuchtigkeit, ist geruchsneutral und resistent gegen Pilzbefall. Durch die kontrollierte Verwendung von Versteifungsschichten mit vorgebbarem Lufströmungswiderstand und Dehnungssteifigkeit kann die akustische Isolationsfähigkeit und insbesondere die Schallabsorptionscharakteristik in einfacher Weise verbessert und optimiert werden.

In einer Weiterbildung der erfindungsgemässen Hutablage ist die eine oder andere Versteifungsschicht 3, 4 mit einer luftundurchlässigen Folie versehen, um damit die Schallabsorptionsfähigkeit auf der einen oder anderen Seite der Hutablage zu begrenzen. Es versteht sich, dass das erfindungsgemässe Bauteil auch zur Abdeckung der Reserveradmulde verwendet werden kann, oder sich für die Verwendung als Radkastenabdeckung oder Seitenteil, beispielsweise in Stationswagen, besonders eignet. Die Anbringung von Befestigungsmitteln, insbesondere Scharnieren, Oesen oder dergleichen kann bei dem vorliegenden Bauteil durch blosses Reibschweissen oder Verkleben bewerkstelligt werden.

Fig. 2 zeigt ein geeignetes Verfahren zur Herstellung des erfindungsgemässen Bauteils. Dieses Verfahren sieht vor, in einem ersten Schritt einen Stapel 11 bereitzustellen, welcher eine erste vorverdichtete und luftdurchlässige Versteifungsschicht 4, eine wabenartige Kernschicht 2 und eine zweite vorverdichtete und luftdurchlässige Versteifungsschicht 3 umfasst. Dieser Stapel 11 wird in einem nächsten Verfahrensschritt zwischen beheizbaren Platten 12, 13 erwärmt, um die Versteifungsschichten 3, 4 mit der wabenartigen Kernschicht 2 stoffschlüssig verbinden zu können, d.h. im Verbindungsbereich anzuschmelzen. Dies wird insbesondere dadurch ermöglicht, dass die Kernschicht 2 und die damit zu verbindenden Versteifungsschichten 3, 4 thermoplastisches Material umfassen, welches sich im geschmolzenem Zustand verbindet und sich beim Abkühlen verfestigt. In einer bevorzugten Ausführungsform ist die wabenartige Kernschicht 2 aus Polypropylen gefertigt und bestehen die Versteifungsschichten 3, 4 aus einem Faservlies mit mindestens 50% Schmelz- oder Bindefasern, vorzugsweise Polypropylenfasern. Es versteht sich, dass die verwendeten Versteifungsschichten 3, 4 auch mehrlagig ausgebildet sein können, und inbesondere eine erste Lage aus SMMS-Material (Spun-bond, Melt-blown, Melt-blown, Spun-bond Polypropylenfasern) und eine zweite Lage aus einem Faservlies mit ca. 20% Polypropylenfasern und einem höheren Anteil an Versteifungsfasern (Glas, Aramid, etc.). Es erweist sich als wesentlich, dass als Versteifungsschichten vorverdichtete Faservliese verwendet werden, um während der Aufwärmphase genügend Wärme in den Verbindungsbereich zwischen Versteifungsschicht und Kernschicht bringen zu können, ohne dabei die Versteifungsschichten und deren physikalische Eigenschaften, insbesondere deren Luftdurchlässigkeit zu beeinträchtigen. Diese Erwärmungsphase wird der Fachmann derart einstellen, dass ein in Abhängigkeit der Dimensionen und Zusammensetzung des zu formenden Teils geeignetes Temperaturprofil erzeugt wird. Dazu wird der Fachmann die Temperatur, den Anpressdruck der Platten 12, 13 und die Erwärmzeit kontrollieren. Dieses Temperaturprofil weist in Plattennähe relativ hohe Temperaturen auf und bleibt in der Kernzone relativ kalt. Typischerweise werden Temperaturen zwischen 160°C und 220°C erzeugt. Damit kann erreicht werden, dass die Wabenstruktur der Kernschicht 2 lediglich in ihrem Verbindungsbereich erweicht, d.h. ihre Form nicht zerstört wird und eine Verbindung mit den benachbart liegenden Versteifungsschichten 3, 4 möglich wird. Nach dieser Erwärmungsphase wird der Stapel 11 in ein kaltes Formwerkzeug 14 transferiert, in welchem der erwärmte Stapel 11 in seine endgültige Form gebracht wird und die verschiedenen Schichten 2, 3, 4, 5, 6 miteinander verbunden werden. Es versteht sich, dass der erwärmte Stapel 11 beim Transfer mit zusätzlichen Dekorschichten 5, 6 belegt werden kann und das herzustellende Teil gleichzeitig bei der Formgebung oder im Nachhinein zugeschnitten werden kann. In der Regel sind diese Decor-Schichten 5, 6 wärmeempfindlich und werden deshalb erst nach der Erwärmung des Stapels aufgebracht. In einer Weiterbildung dieses Verfahrens wird zwischen dem erwärmten Stapel 11 und einer der Dekorschichten 5, 6 eine luftundurchlässige Folie, die gleichzeitig als Klebehilfe wirken kann, eingebracht.

## Patentansprüche

1. Bauteil, insbesondere Hutablage, mit einer wabenartigen Kernschicht (2), welche beidseitig mit einer Versteifungsschicht (3, 4) aus Fasermaterial versehen ist, wobei die Versteifungsschicht (3, 4) ein Faservlies mit thermoplastischen Fasern umfasst, die Kernschicht (2) aus einem thermoplastischen Material gefertigt ist und mit den thermoplastischen Fasern der Versteifungsschicht (3, 4) verbunden ist, **dadurch gekennzeichnet, dass** die Kernschicht mit den thermoplastischen Fasern der Versteifungsschicht (3, 4) stoffschlüssig verbunden ist und daß die Versteifungsschicht (3, 4) vorverdichtet und luftdurchlässig ist und einen Luftströmungswiderstand im Bereich von 500Nsm⁻³ < R < 3500Nsm⁻³ aufweist.

2. Bauteil nach Anspruch 1, **dadurch gekennzeichnet, dass** die Versteifungsschicht (3, 4) aus einem Faservlies mit mindestens 50% Polypropylenfasern besteht.

3. Bauteil nach Anspruch 1, **dadurch gekennzeichnet, dass** die Versteifungsschicht (3, 4) ein Faservlies mit ca. 20% Polypropylenfasern und ein Faservlies aus Polypropylen SMMS-Material umfasst.

4. Bauteil nach Anspruch 1, **dadurch gekennzeichnet, dass** mindestens die fahrgastzellenseitige Vestärkungsschicht (3) 50% bis 80%, vorzugsweise ca. 70% Polypropylenfasern und 20% bis 50%, vorzugsweise ca. 30% Glasfasern oder Polyesterfasern oder Aramidfasern aufweist.

5. Bauteil nach Anspruch 1, **dadurch gekennzeichnet, dass** die Versteifungsschichten (3, 4) ein Flächengewicht von 300 bis 1000 g/m2 aufweisen.

6. Bauteil nach Anspruch 1, **dadurch gekennzeichnet, dass** die wabenartige Kernschicht (2) eine Dicke von 10 mm bis 30 mm aufweist, ein Flächengewicht im Bereich von 800 bis 1600 g/m2, d.h. eine Dichte von 25 bis 160 kg/m3 aufweist.

7. Bauteil nach einem der Ansprüche 1 bis 6, **dadurch gekennzeichnet, dass** die fahrgastzellenseitige Versteifungsschicht (3) mit einer luftdurchlässigen Dekorschicht (5) versehen ist.

8. Bauteil nach einem der Ansprüche 1 bis 7, **dadurch gekennzeichnet, dass** die kofferraumseitige Versteifungsschicht (4) mit einer luftdurchlässigen Dekorschicht (6) versehen ist.

9. Bauteil nach einem der Ansprüche 1 bis 8, **dadurch gekennzeichnet, dass** diese fahrgastzellenseitig oder kofferraumseitig mit einer dünnen luftundurchlässigen Folie versehen ist.

10. Verfahren zur Herstellung eines Bauteils, insbesondere eine Hutablage, **dadurch gekennzeichnet, dass** ein Stapel 11 mit mindestens folgender Schichtfolge bereitgestellt wird:
• eine erste vorverdichtete, luftdurchlässige Versteifungsschicht (4) aus einem Faservlies mit thermoplastischen Fasern;
• eine wabenartige Kernschicht (2) aus einem thermoplastischen Material;
• eine zweite vorverdichtete, luftdurchlässige Versteifungsschicht (3) aus einem Faservlies mit thermoplastischen Fasern;
welcher Stapel in einem nächsten Verfahrensschritt zwischen beheizbaren Platten (12, 13) aufgewärmt wird, um die Versteifungsschichten (3, 4) und die wabenartige Kernschicht (2) in ihrem Verbindungsbereich anzuschmelzen;
welcher Stapel (11) in einem weiteren Verfahrensschritt in ein kaltes Formwerkzeug (14) transferiert wird und in seine gewünschte Form gebracht wird.

11. Verfahren nach Anspruch 10 **dadurch gekennzeichnet, dass** der erwärmte Stapel (11) mit Dekorschichten (5, 6) versehen wird, bevor dieser in das kalte Formwerkzeug (14) eingebracht wird.

## Claims

1. A component part, in particular a rear parcel shelf, having a honeycomb like core layer (2), which is provided on both sides with a reinforcing layer (3, 4) made of fibrous material, whereby the reinforcing layer (3, 4) comprises a nonwoven having thermoplastic fibers, the core layer (2) is made of a thermoplastic material and is bonded with the thermoplastic fibers of the reinforcing layer (3, 4), wherein the core layer is materially bonded with the thermoplastic fibers of the reinforcing layer (3, 4), and that the reinforcing layer (3, 4) is precompressed and is permeable to air and has an air flow resistance in the range of 500Nsm⁻³ < R < 3500Nsm⁻³.

2. Component part according to claim 1, wherein the reinforcing layer (3, 4) comprises a fibrous nonwoven having a content of at least 50% polypropylene fibers.

3. Component part according to claim 1, wherein the reinforcing layer (3, 4) comprises a fibrous nonwoven having a content of about 20% polypropylene fibers and a fibrous nonwoven comprising polypropylene SMMS-material.

4. Component part according to claim 1, wherein the reinforcing layer (3) on the passenger compartment side comprises between 50% to 80%, and preferably about 70% polypropylene fibers and between 20% to 50%, and preferably about 30% glass fibers or polyester fibers or aramide fibers.

5. Component part according to claim 1, wherein the reinforcing layers (3, 4) have an area weight of between 300 to 1000 g/m².

6. Component part according to claim 1, wherein the honeycomb like core layer (2) has a thickness of 10 mm to 30 mm and an area weight in the range of 800 g/m² to 1600 g/m², that means has a density of 25 kg/m³ to 160 kg/m³.

7. Component part according to one of claims 1 to 6, wherein the reinforcing layer (3) on the passenger compartment side is provided with an air permeable decor layer (5).

8. Component part according to one of claims 1 to 7, wherein the reinforcing layer (4) on the trunk or boot side is provided with an air permeable decor layer (6).

9. Component part according to one of claims 1 to 8, wherein said component part is provided with a thin, air impermeable foil on the passenger compartment side or on the trunk or boot side.

10. Method for producing a component part, in particular a rear parcel shelf, wherein a stack (11) having at least the following succession of layers is provided:
- a first precompressed, air permeable reinforcing layer (4) made of a fibrous nonwoven having thermoplastic fibers;
- a honeycomb-like core layer (2) made of a thermoplastic material;
- a second precompressed, air permeable reinforcing layer (3) made of a fibrous nonwoven having thermoplastic fibers;
in a next method step, said stack being heated between heatable plates (12, 13), in order to soften the reinforcing layers (3, 4) and the honeycomb-like core layer (2) in their bonding regions;
and in a next method step said stack (11) being transferred into a cold moulding tool (14) and being brought into its desired form.

11. Method according to claim 10, wherein the heated stack (11 ) is provided with decor layers (5, 6) prior to being inserted into the cold moulding tool (14).

## Revendications

1. Composant, notamment plage arrière, comprenant une couche centrale (2) en forme de nids d'abeille munie aux deux faces d'une couche de raidissement (3, 4) en matériau fibreux, la couche de raidissement (3, 4) comportant un non-tissé fibreux avec des fibres thermoplastiques, la couche centrale (2) étant réalisée en matériau thermoplastique et reliée aux fibres thermoplastiques de la couche de raidissement (3, 4), **caractérisé en ce que** la couche centrale est reliée aux fibres thermoplastiques de la couche de raidissement (3, 4) par complémentarité de matériaux, et **en ce que** la couche de raidissement (3, 4) est précomprimée et perméable à l'air et présente une résistance au courant d'air située dans la plage comprise entre 500 Nsm⁻³ < R < 3500 Nsm⁻³.

2. Composant selon la revendication 1, **caractérisé en ce que** la couche de raidissement (3, 4) est composée d'un non-tissé fibreux avec au moins 50% de fibres de polypropylène.

3. Composant selon la revendication 1, **caractérisé en ce que** la couche de raidissement (3, 4) comprend un non-tissé fibreux avec 20% de fibres de polypropylène environ et un non-tissé en matériau SMMS de polypropylène.

4. Composant selon la revendication 1, **caractérisé en ce qu'**au moins la couche de raidissement (3) côté intérieur du véhicule présente 50% à 80%, de préférence 70% environ de fibres de polypropylène et 20% à 50%, de préférence 30% environ de fibres de verre ou de fibres de polyester ou de fibres d'aramide.

5. Composant selon la revendication 1, **caractérisé en ce que** les couches de raidissement (3, 4) présentent une masse au mètre carré comprise entre 300 et 1000 g/m².

6. Composant selon la revendication 1, **caractérisé en ce que** la couche centrale (2) en forme de nids d'abeilles présente une épaisseur comprise entre 10 mm et 30 mm, une masse au mètre carré comprise entre 800 et 1600 g/m², c'est-à-dire une densité comprise entre 25 et 160 kg/m³.

7. Composant selon l'une quelconque des revendications 1 à 6, **caractérisé en ce que** la couche de raidissement (3) côté intérieur du véhicule est munie d'une couche de décoration (5) perméable à l'air.

8. Composant selon l'une quelconque des revendications 1 à 7, **caractérisé en ce que** la couche de raidissement (4) côté coffre est munie d'une couche de décoration (6) perméable à l'air.

9. Composant selon l'une quelconque des revendications 1 à 8, **caractérisé en ce que** celui-ci, côté intérieur du véhicule ou côté coffre, est muni d'un film mince imperméable à l'air.

10. Procédé de fabrication d'un composant, notamment d'une plage arrière, **caractérisé en ce qu'**une pile 11 comprenant au moins la succession de couches suivante est réalisée :
. une première couche de raidissement (4) précomprimée perméable à l'air en non-tissé fibreux avec des fibres thermoplastiques ;
. une couche centrale (2) en forme de nids d'abeille en matériau thermoplastique ;
. une deuxième couche de raidissement (3) précomprimée perméable à l'air en non-tissé fibreux avec des fibres thermoplastiques ;
laquelle pile étant chauffée, dans une étape de procédé suivante, entre des plaques chauffantes (12, 13) pour relier par fusion les couches de raidissement (3, 4) et la couche centrale (2) en forme de nids d'abeille au niveau de leur zone d'assemblage ;
laquelle pile (11) étant transférée, dans une étape de procédé suivante, dans un outil de moulage froid (14) pour lui conférer sa forme souhaitée.

11. Procédé selon la revendication 10, **caractérisé en ce que** la pile (11) chauffée est munie de couches de décoration (5, 6) avant d'être introduite dans l'outil de moulage froid (14).
